# EUROPEAN PATENT SPECIFICATION

(11) **EP 1 018 595 B1**
(45) Date of publication and mention of the grant of the patent: **12.03.2003**
(21) Application number: 99310509.7
(22) Date of filing: 23.12.1999
(51) Int. Cl.: F01N 7/08, B60K 13/04

(54) **Exhaust finisher**
Auspuffblende
Enjoliveur d'échappement

(30) Priority: 06.01.1999 GB 9900116
(43) Date of publication of application: 12.07.2000
(73) Proprietor: MG Rover Group Limited, Longbridge, Birmingham B31 2TB (GB)
(72) Inventor: Hughes, Peter Terence, Solihull, West Midlands B91 3EJ (GB); Jackson, Robert, Yardley, Birmingham B26 1SR (GB)
(74) Representative: Watts, Peter Graham

(56) References cited:
- DE-A- 2 323 071
- DE-A- 2 908 325
- US-A- 3 318 533

## Description

The present invention relates to a finisher for a motor vehicle exhaust or tailpipe.

Finishers are typically provided to improve the aesthetic appearance of the exhaust assembly of a motor vehicle where it is visible to those outside the motor vehicle, for example that part of the exhaust system that extends beyond a rear portion of the motor vehicle. Sometimes, finishers are provided to enhance the perceived value or performance of a motor vehicle. For example, a finisher may enable the visible appearance of an exhaust system of a standard motor vehicle to mimic that of a more powerful or sporty motor vehicle.

However, upon closer inspection there are normally a couple of clues that reveal that the exhaust system is that of a standard motor vehicle. Finishers are attached to a free end of an exhaust system. As a result, between the end of an exhaust box and the finisher, there is a portion of a tubular member of reduced cross section, this is known as neck down, and is an indication that a finisher has been applied. In exhaust systems that do not include a finisher, there is no neck down, the exhaust pipe extending with substantially constant cross section from the exhaust box. A further clue is the presence of a head of a threaded member that has been used to secure the finisher to the exhaust pipe. Again, in exhaust systems that do not include a finisher, this feature is not present, since there is no need to pass a threaded fastener into the exhaust pipe.

At present, finishers are normally only applied to the exhaust systems of petrol vehicles and not to those of diesel vehicles. Exhaust pipes of petrol vehicles extend out in a straight manner, while those of diesel vehicles do not. In order to meet noise and emission requirements, the exhaust pipes of such vehicles are usually either located within a bumper arrangement of the vehicle or extend beyond the rear of the vehicle. The latter are provided with a downwardly turned portion to direct the exhaust gases and particulates toward a ground surface to ensure the noted requirements are met. Finishers for exhaust systems of petrol vehicles would not be suitable for such arrangements, since they provide for a substantially straight tubular member which would block the exhaust pipe of a diesel vehicle.

DE2908325 discloses a finisher suitable for use with a down turned exhaust pipe. The position of the finisher is however dictated by the end of the exhaust pipe and, unless designed for the specific vehicle, is likely to terminate short of the exhaust box, revealing that a finisher has been fitted. Furthermore, with this form of finisher, it is not possible to disguise the fastener used to secure the finisher to the exhaust pipe.

It is an advantage of the present invention in various aspects that it seeks to eliminate or reduce these problems.

According to the present invention a finisher for attachment to the free end of a motor vehicle exhaust pipe, the finisher comprising an outer tubular sleeve member having a longitudinal axis and an opening in a lower surface thereof, the opening being located towards a second end of the outer tubular sleeve member, characterised in that an inner tubular member is located within the outer tubular sleeve member, the inner tubular member having a first portion and a second portion, the first portion extending around at least a part of the longitudinal axis of the outer tubular sleeve member and the second portion connecting the opening in the outer tubular sleeve member to the first portion of the inner tubular member, the first portion of the inner sleeve member providing a socket formation for attachment of the finisher to the end of an exhaust pipe.

Preferably, an aperture is provided in the second portion of the inner tubular member.

Preferably, the first end of the outer tubular sleeve member is provided with a perforated covering.

Preferably a concealed fastening means is provided between the inner tubular member and the outer tubular sleeve member. More preferably the concealed fastening comprises an internally threaded ring securely mounted between a portion of the inner tubular member having an aperture and a portion of the outer tubular sleeve member having an aperture, and a threaded member passing through the aperture in the outer tubular sleeve member, threaded through the ring and passing through the aperture in the inner tubular member. Even more preferably, the ring is securely mounted on the inner tubular member.

Preferably the first portion of the inner tubular member terminates within the outer tubular sleeve member.

The present invention also covers an exhaust system for a motor vehicle, including an exhaust box and an exhaust pipe with a finisher fitted over the exhaust pipe, characterised in that a first end of the outer tubular sleeve member abuts a wall of the exhaust box.

Preferably, the exhaust pipe is shortened prior to fitting of the finisher.

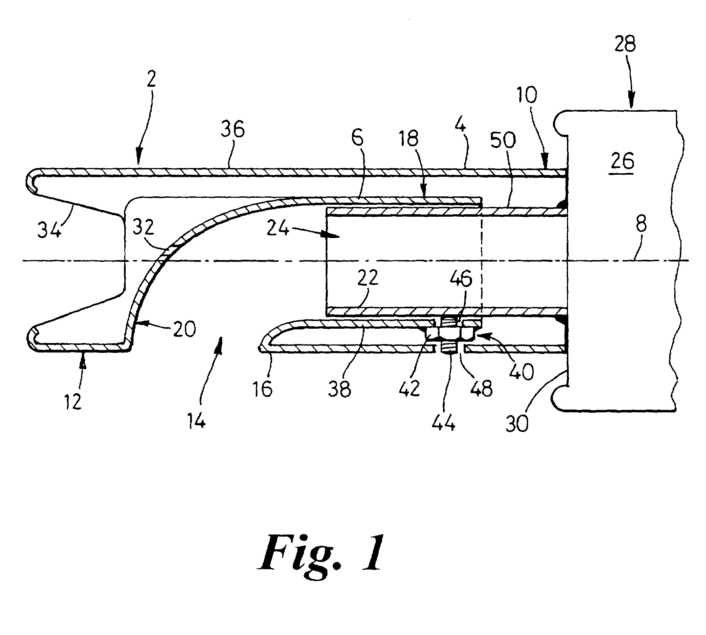

The invention will now be described, by way of example only, with reference to the accompanying Figure, Fig. 1 which shows in section an exhaust pipe finisher 2 according to the present invention.

An outer tubular sleeve member 4 and an inner tubular member 6 are shown.

The outer tubular sleeve member 4 comprises a longitudinal axis 8 extending between a first end 10 of the outer tubular sleeve member and a second end 12. An opening 14 in a lower surface 16 of the outer tubular sleeve member located towards the second end 12 of the outer tubular sleeve member.

The inner tubular member 6 passes within the outer tubular sleeve member. The inner tubular member comprises a first portion 18 and a second portion 20. The first portion 18 extends along and around at least a part of the longitudinal axis 8 of the tubular outer sleeve member. The second portion 20 connects the opening 14 in the tubular outer sleeve member to the first portion 18 of the inner tubular member.

In use, the first portion of the inner tubular member is adapted to fit around a free end of a motor vehicle exhaust pipe 24. The finisher may fit directly onto an exhaust pipe of a petrol vehicle. However, to fit the finisher to a diesel exhaust, it will be necessary to cut short the exhaust pipe to remove any down turned portion before fitting the finisher of the present invention. The first portion 18 of the inner tubular member terminates within the outer tubular sleeve member 4. The first end 10 of the outer tubular sleeve member is thus able to abut an adjacent face 30 of an exhaust box 26 forming part of a motor vehicle exhaust system 28. Accordingly, the exhaust finisher is able to avoid the appearance of neck down.

An aperture 32 may be provided in the second portion 20 of the inner tubular member to serve as a bleed hole.

The second end 12 of the outer tubular sleeve member may be provided with a gauze or a similar perforated covering 34.

The outer tubular sleeve member 4 is conveniently manufactured from stainless steel. This gives a desired shiny surface finish to an outer surface 36 of the finisher. Any other suitable material may be used.

The finisher is conveniently secured to the free end 22 of the exhaust pipe by way of a concealed finisher mounting 40. An internally threaded ring 42 is securely mounted to an outer surface 38 of the inner tubular member 6 prior to assembly of the finisher. The ring 42 is mounted over an aperture 46 in the inner tubular member. The ring 42 may be welded to the inner tubular member or otherwise secured by any other suitable means. A similar aperture 48 is provided in the outer tubular sleeve member which after assembly of the finisher is located over the ring.

A threaded member, for example a grub screw 44, is then passed through the aperture 48 in the outer tubular sleeve member, threaded through the ring 42 and passed through the aperture 46 in the inner tubular member. In use, the threaded member may then be driven to engage with an outer surface 50 of the exhaust pipe 24 to secure the finisher to the exhaust pipe. The threaded member is sized such that when holding the finisher 2 in position it does not extend beyond the outer surface 36 of the outer tubular sleeve member.

As the fastener is used with the finisher of the present invention, it is only the fit of the first end of the outer tubular sleeve member and the aperture in the outer tubular sleeve member through which the fastener passes that will indicate that the exhaust system is provided with a finisher, and is not the exhaust system that it seems to be.

A further embodiment (not shown) of a finisher according to the present invention includes a further tubular member joined in parallel alongside the outer tubular sleeve member of the previous embodiment. The further tubular member is of a similar length to the outer tubular sleeve member and is conveniently manufactured from a similar material. This embodiment gives the appearance of a double exhaust to a single exhaust system.

## Claims

1. A finisher for attachment to the free end of a motor vehicle exhaust pipe (24), the finisher comprising an outer tubular sleeve member (4) having a longitudinal axis (8) and an opening (14) in a lower surface (16) thereof, the opening (14) being located towards a second end (12) of the outer tubular sleeve member (4), **characterised in that** an inner tubular member (6) is located within the outer tubular sleeve member (4), the inner tubular member (6) having a first portion (18) and a second portion (20), the first portion (18) extending around at least a part of the longitudinal axis (8) of the outer tubular sleeve member (4) and the second portion (20) connecting the opening (14) in the outer tubular sleeve member (4) to the first portion (18) of the inner tubular member (6), the first portion (18) of the inner sleeve member (6) providing a socket formation for attachment of the finisher to the end of an exhaust pipe (24).

2. A finisher according to claim 1, **characterised in that** an aperture (32) is provided in the second portion (20) of the inner tubular member (6).

3. A finisher according to claim 1 or claim 2, **characterised in that** the second end (12) of the outer tubular sleeve member (4) is provided with a perforated covering (34).

4. A finisher according to any previous claim, **characterised in that** a concealed fastening means (40) is provided between the inner tubular member (6) and the outer tubular sleeve member (4).

5. A finisher according to claim 4, **characterised in that** the concealed fastening means (40) comprises an internally threaded ring (42) securely mounted between a portion of the inner tubular member (6) having an aperture (46) and a portion of the outer tubular sleeve member (4) having an aperture (48), and a threaded member (44) passing through the aperture (48) in the outer tubular sleeve member (4), threaded through the ring (42) and passing through the aperture (46) in the inner tubular member (6).

6. A finisher according to claim 5, **characterised in that** the ring (42) is securely mounted on the inner tubular member (6).

7. A finisher according to any previous claim, **characterised in that** the first portion (18) of the inner tubular member (6) terminates within the outer tubular sleeve member (4).

8. An exhaust system for a motor vehicle including an exhaust box and an exhaust pipe with a finisher according to any of claims 1 to 7 fitted over the exhaust pipe (24), is **characterised in that** a first end (10) of the outer tubular sleeve member (4) abuts a wall (30) of the exhaust box (26).

9. An exhaust system according to claim 8, **characterised in that** the exhaust pipe (24) is shortened prior to fitting of the finisher.

## Patentansprüche

1. Blende zur Befestigung an dem freien Ende einer Kraftfahrzeugauspuffleitung (24), wobei die Blende ein äußeres Rohrstutzenelement (4) mit einer Längsachse (8) und einer Öffnung (14) in einer unteren Oberfläche (16) davon umfaßt, wobei die Öffnung (14) in Richtung eines zweiten Endes (12) des äußeren Rohrstutzenelements (4) angeordnet ist, **dadurch gekennzeichnet, daß** ein inneres Rohrelement (6) in dem äußeren Rohrstutzenelement (4) angeordnet ist, wobei das innere Rohrelement (6) einen ersten Abschnitt (18) und einen zweiten Abschnitt (20) umfaßt, wobei der erste Abschnitt (18) um zumindest einen Teil der Längsachse (8) des äußeren Rohrstutzenelements (4) herum verläuft, und der zweite Abschnitt (20) die Öffnung (14) in dem äußeren Rohrstutzenelement (4) mit dem ersten Abschnitt (18) des inneren Rohrelements (6) verbindet, wobei der erste Abschnitt (18) des inneren Rohrstutzenelements ein Buchsengebilde zur Befestigung der Blende an dem Ende einer Auspuffleitung (24) bereitstellt.

2. Blende nach Anspruch 1, **dadurch gekennzeichnet, daß** eine Öffnung (32) in dem zweiten Abschnitt (20) des inneren Rohrelements (6) vorgesehen ist.

3. Blende nach Anspruch 1 oder Anspruch 2, **dadurch gekennzeichnet, daß** das zweite Ende (12) des äußeren Rohrstutzenelements (4) mit einer perforierten Hülle (34) versehen ist.

4. Blende nach einem vorhergehenden Anspruch, **dadurch gekennzeichnet, daß** eine verdeckte Befestigungsvorrichtung (40) zwischen dem inneren Rohrelement (6) und dem äußeren Rohrstutzenelement (4) vorgesehen ist.

5. Blende nach Anspruch 4, **dadurch gekennzeichnet, daß** die verdeckte Befestigungsvorrichtung (40) einen Innengewindering (42) umfaßt, der fest zwischen einem Abschnitt des inneren Rohrelements (6) mit einer Öffnung (46) und einem Abschnitt des äußeren Rohrstutzenelements (4) mit einer Öffnung (48) montiert ist, und ein Gewindeelement (44) aufweist, das durch die Öffnung (48) in dem äußeren Rohrstutzenelement (4) tritt, durch den Ring (42) geschraubt ist und durch die Öffnung (46) in dem inneren Rohrelement (6) tritt.

6. Blende nach Anspruch 5, **dadurch gekennzeichnet, daß** der Ring (42) fest an dem inneren Rohrelement (6) montiert ist.

7. Blende nach einem vorhergehenden Anspruch, **dadurch gekennzeichnet, daß** der erste Abschnitt (18) des inneren Rohrelements (6) in dem äußeren Rohrstutzenelement (4) endet.

8. Abgassystem für ein Kraftfahrzeug mit einem Auspufftopf und einer Auspuffleitung, die eine Blende gemäß einem der Ansprüche 1 bis 7 aufweist, die über die Auspuffleitung (24) angebaut ist, **dadurch gekennzeichnet, daß** ein erstes Ende (10) des äußeren Rohrstutzenelements (4) an eine Wand (30) des Auspufftopfs (26) anstößt.

9. Auspuffsystem nach Anspruch 8, **dadurch gekennzeichnet, daß** die Auspuffleitung (24) vor dem Anbau der Blende gekürzt wird.

## Revendications

1. Enjoliveur destiné à une fixation à l'extrémité libre d'un tuyau d'échappement de véhicule à moteur (24), l'enjoliveur comprenant un élément de manchon tubulaire extérieur (4) comportant un axe longitudinal (8) et une ouverture (14) dans une surface inférieure (16) de celui-ci, l'ouverture (14) étant située vers une seconde extrémité (12) de l'élément de manchon tubulaire extérieur (4), **caractérisé en ce qu'**un élément tubulaire intérieur (6) est situé à l'intérieur de l'élément de manchon tubulaire extérieur (4), l'élément tubulaire intérieur (6) comportant une première partie (18) et une seconde partie (20), la première partie (18) s'étendant autour d'au moins une partie de l'axe longitudinal (8) de l'élément de manchon tubulaire extérieur (4) et la seconde partie (20) reliant l'ouverture (14) dans l'élément de manchon tubulaire extérieur (4) à la première partie (18) de l'élément tubulaire intérieur (6), la première partie (18) de l'élément de manchon intérieur (6) fournissant un dispositif d'embout en vue de la fixation de l'enjoliveur à l'extrémité d'un tuyau d'échappement (24).

2. Enjoliveur selon la revendication 1, **caractérisé en ce qu'**une ouverture (32) est prévue dans la seconde partie (20) de l'élément tubulaire intérieur (6).

3. Enjoliveur selon la revendication 1 ou la revendication 2, **caractérisé en ce que** la seconde extrémité (12) de l'élément de manchon tubulaire extérieur (4) est muni d'un habillage perforé (34).

4. Enjoliveur selon l'une quelconque des revendications précédentes, **caractérisé en ce qu'**un moyen de fixation dissimulé (40) est prévu entre l'élément tubulaire intérieur (6) et l'élément de manchon tubulaire extérieur (4).

5. Enjoliveur selon la revendication 4, **caractérisé en ce que** le moyen de fixation dissimulé (40) comprend un anneau fileté intérieurement (42) monté de façon sûre entre une partie de l'élément tubulaire intérieur (6) comportant une ouverture (46) et une partie de l'élément de manchon tubulaire extérieur (4) comportant une ouverture (48), et un élément fileté (44) passant à travers l'ouverture (48) dans l'élément de manchon tubulaire extérieur (4), vissé par l'intermédiaire de l'anneau (42) et passant à travers l'ouverture (46) de l'élément tubulaire intérieur (6).

6. Enjoliveur selon la revendication 5, **caractérisé en ce que** l'anneau (42) est monté de façon sûre sur l'élément tubulaire intérieur (6).

7. Enjoliveur selon l'une quelconque des revendications précédentes, **caractérisé en ce que** la première partie (18) de l'élément tubulaire intérieur (6) se termine à l'intérieur de l'élément de manchon tubulaire extérieur (4).

8. Système d'échappement destiné à un véhicule à moteur comprenant un carter d'échappement et un tuyau d'échappement avec un enjoliveur selon l'une quelconque des revendications 1 à 7 monté sur le tuyau d'échappement (24), **caractérisé en ce qu'**une première extrémité (10) de l'élément de manchon tubulaire (4) vient en butée sur une paroi (30) du carter d'échappement (26).

9. Système d'échappement selon la revendication 8, **caractérisé en ce que** le tuyau d'échappement (24) est raccourci avant le montage de l'enjoliveur.
